# EUROPEAN PATENT APPLICATION

(11) **EP 1 970 493 A2**
(43) Date of publication of application: **17.09.2008**
(21) Application number: 08101948.1
(22) Date of filing: 25.02.2008
(51) Int. Cl.: E02D 1/04, E21B 49/02, G01N 1/08, E21B 7/02

(54) **Soil sampling apparatus**

(30) Priority: 26.02.2007 NL 2000509
(71) Applicant: Eugelink, Mathieu Antonius Wilhelmus, 6998 CC Laag-Keppel (NL)
(72) Inventor: Eugelink, Mathieu Antonius Wilhelmus, 6998 CC Laag-Keppel (NL)
(74) Representative: Bakker, Hendrik

(57) **Abstract**

The invention relates to an apparatus (1) for taking soil samples, comprising means (2) for moving the apparatus and sampling means (10) for taking soil samples during travel of the apparatus. The apparatus is provided with first means (8) for moving the sampling means substantially transversely of the direction of travel (A) and with second means (4) for moving the sampling means substantially parallel to the direction of travel.

## Description

The present invention relates to an apparatus for taking soil samples, comprising means for moving the apparatus and sampling means for taking soil samples during travel of the apparatus.

It is usual during all seasons to take soil samples of agricultural land in order to determine the nutrient condition of the soil. As an indication, an average of forty soil samples are taken per two hectares of agricultural land and placed together. The collected soil is sent to specialist laboratories for analysis. The taking of soil samples was for a long time carried out manually by walking over the land with a soil drill and taking soil samples at various locations at a certain mutual distance. By way of improvement soil sampling machines have been developed which can move the drill over the land to any desired location. At the position of each sampling location this machine must then stop in order to take a soil sample.

An apparatus of the type stated in the preamble is meanwhile known in practice. The known apparatus comprises a large wheel, on the periphery of which a small soil drill is mounted.

The known apparatus saves time since it is no longer necessary to stop at each sampling location. The known apparatus does however still have drawbacks. A significant drawback is that the maximum travel speed is low. In addition, the drill may not be inserted sufficiently deeply into the ground to comply with the current requirements in the Netherlands for soil samples from agricultural land.

The invention has for its object to provide an apparatus as according to the preamble of claim 1 which obviates these drawbacks.

The apparatus according to the invention has for this purpose the feature that the apparatus is provided with first means for moving the sampling means substantially transversely of the direction of travel; and with second means for moving the sampling means substantially parallel to the direction of travel.

The movement transversely of the direction of travel gives the sampling means sufficient speed to reach the intended depth. The movement parallel to the direction of travel provides the possibility of allowing the apparatus according to the invention to continue travelling at a relatively high speed during the sampling.

In a first practical preferred embodiment the sampling means are mounted on the first means, and the first means are mounted on the second means for movement substantially parallel to the direction of travel.

In a further reliable preferred embodiment the first means comprise a frame which is provided with guide means for guiding the sampling means substantially transversely of the direction of travel.

According to another preferred embodiment, the first means further comprise drive means for driving the movement of the sampling means substantially transversely of the direction of travel. An even greater depth can be achieved by assisting the movement of the sampling means toward the ground. The assistance in reverse direction accelerates withdrawal of the sampling means from the ground, and therefore also has a positive effect on the maximum achievable travel speed.

In an elegant preferred embodiment the second means comprise a carriage which is provided with guide means for guiding the first means substantially parallel to the direction of travel and with an opening for passage of the sampling means.

In a further development hereof the carriage extends at an angle relative to the direction of travel such that the height of the carriage increases in the direction opposite the direction of travel. The inclination in the carriage ensures that the first means always return to the same starting position, i.e. at the lowest point of the carriage.

The apparatus according to the invention is preferably provided with means for receiving the soil samples taken. The apparatus is more preferably provided with means for emptying the sampling means and for transferring the taken soil samples to the receiving means.

In another preferred embodiment the apparatus is provided with a foot which is adapted to support on the ground close to a sampling position, this foot being provided with an opening for passage of the sampling means. The foot ensures that the soil around the sampling location remains as intact as possible and that no clods are pulled upward together with the sampling means.

In a further developed embodiment the apparatus is provided with means for controlling the movement of the sampling means for the purpose of automatically taking soil samples.
Figure 1A shows a schematic side view of a first preferred embodiment of an apparatus according to the invention;
Figure 1B shows the apparatus of Figure 1A in schematic top view;
Figure 2A shows a part of the apparatus of Figure 1A in schematic front view;
Figure 2B shows a schematic side view of the part of Figure 2A in a rest position; and
Figure 2C shows a schematic side view of the part of Figure 2A in an operating position; and
Figure 3 shows a schematic top view of a further component of the apparatus of Figure 1A.

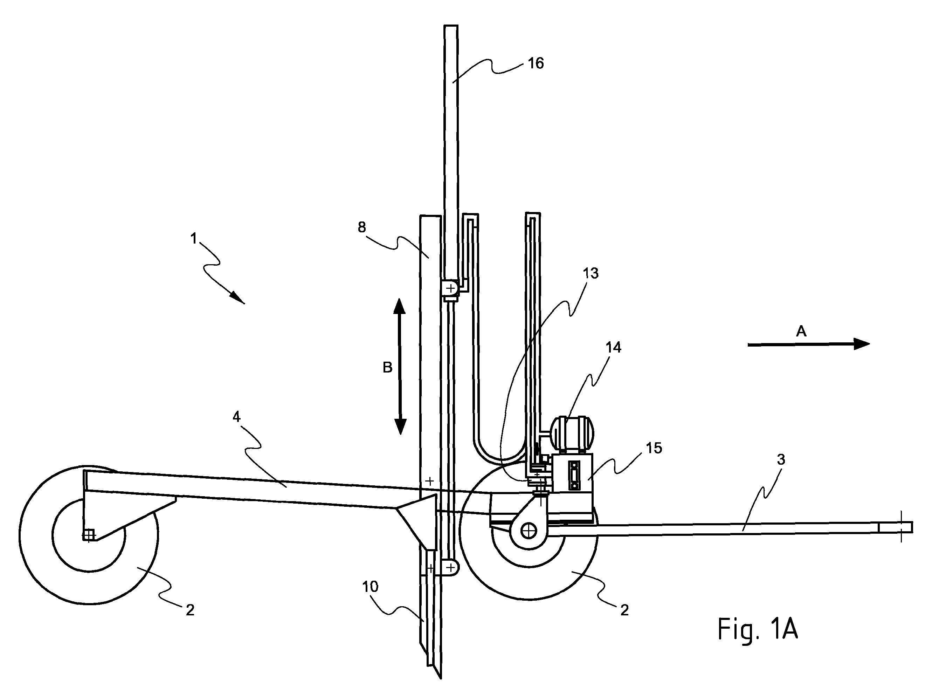

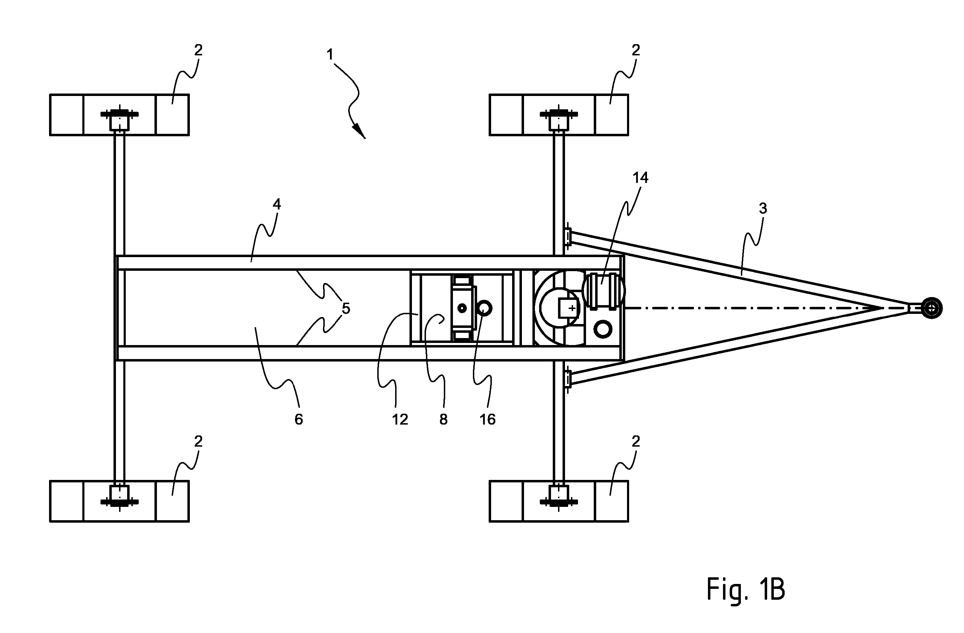

Figure 1A shows a schematic side view of a first preferred embodiment of an apparatus 1 according to the invention. Figure 1B shows apparatus 1 in schematic top view. Apparatus 1 can travel by means of four wheels 2. In the shown preferred embodiment apparatus 1 is embodied as trailer and provided for this purpose with a pole 3. Alternatively, apparatus 1 can also be embodied in a self-propelled version.

Apparatus 1 is intended for the purpose of taking soil samples during travel of apparatus 1 and is equipped for this purpose with sampling means. The sampling means comprise a soil drill 10. Apparatus 1 is further provided with first means for moving the sampling means substantially transversely of the direction of travel indicated with arrow A. These first means comprise a frame 8 on which drill 10 is mounted.

Apparatus 1 is further provided with second means for moving the sampling means substantially parallel to the direction of travel. These second means comprise a carriage 4 with an opening 6. Frame 8 is mounted on carriage 4 such that frame 8 is movable substantially parallel to the direction of travel A. For this purpose frame 8 is mounted on a bearing block 12 and carriage 4 is provided with guide means for the bearing block which extend in longitudinal direction on the inner side of carriage 4. The guide means are preferably formed by the legs of U-shaped carriage 4 which are designated schematically with 5. The carriage opening 6 provides a passage for sampling means 10. Carriage 4 extends at an angle relative to the wheelbase, wherein the height of carriage 4 relative to the wheelbase increases in the direction opposite the direction of travel. Frame 8 will as a result automatically take up the shown position on carriage 4.

Apparatus 1 is also provided with a drive, in this example a hydraulic drive, comprising a pump 13, an accumulator 14, a pressure vessel 15 and a cylinder 16. The drive serves to control and assist the movements of sampling means 10.

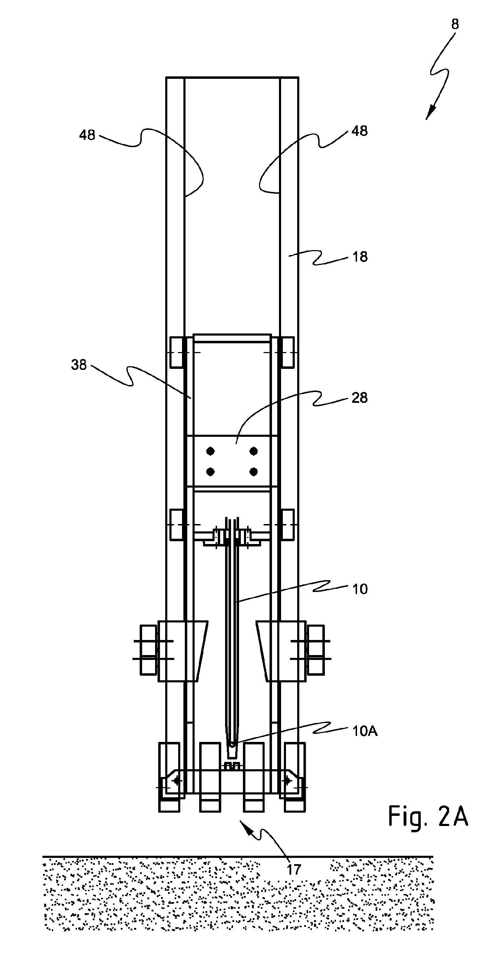

Figure 2A shows frame 8 with sampling means 10 in more detail. Frame 8 consists of an outer frame 18 and an inner frame 28. Inner frame 28 can be accommodated guidably in the outer frame by mounting on a bearing block 38 which is guidable along guide means extending in longitudinal direction on the inner side of the outer frame. The guide means are preferably formed by the legs of U-shaped outer frame 18 which are designated schematically with 48. The guiding direction B lies substantially transversely of the direction of travel A of apparatus 1. The sampling means in the form of drill 10 are mounted on bearing block 38.

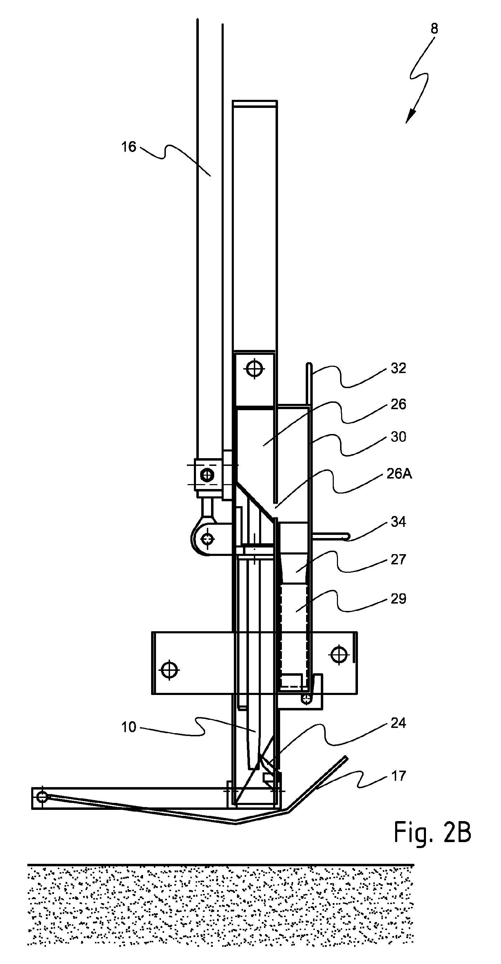

Figure 2B shows frame 8 in the rest position. In the rest position drill 10 is retracted and does not make contact with the ground. Close to the upper side of drill 10 frame 8 is provided with receiving means for receiving taken soil samples. These receiving means comprise a receptacle 26 with an opening 26A and a collecting bin 30 with a holder 27 for attaching a removable bag 29. In the shown rest position the collecting bin 30 is situated adjacently of receptacle 26 such that holder 27 is situated under opening 26A. Each soil sample collected in receptacle 26 enters bag 29 via opening 26A. Collecting bin 30 is provided with handles 32 and 34 for removing the collecting bin for the purpose of exchanging bag 29.

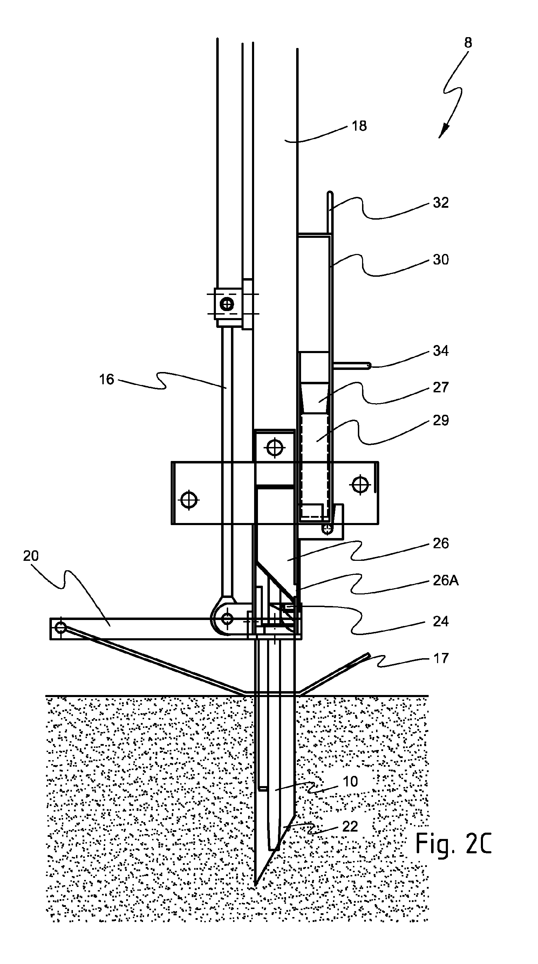

Means 24 are provided for the purpose of emptying a filled drill 20. In the shown preferred embodiment means 24 are embodied in the form of a spoon or a scraper arranged adjacently of drill 10. In figure 2 the scraper 24 is also in a rest position.

Figure 2C shows frame 8 in the operating position. In the operating position scraper 24 protrudes partially into a longitudinal opening 10A (shown in figure 2A) of drill 10 and pushes the available soil sample to receptacle 26 during lowering of drill 10. The drill is then empty and ready to take a new soil sample. The soil falls via opening 26A out of receptacle 26 into bag 29.

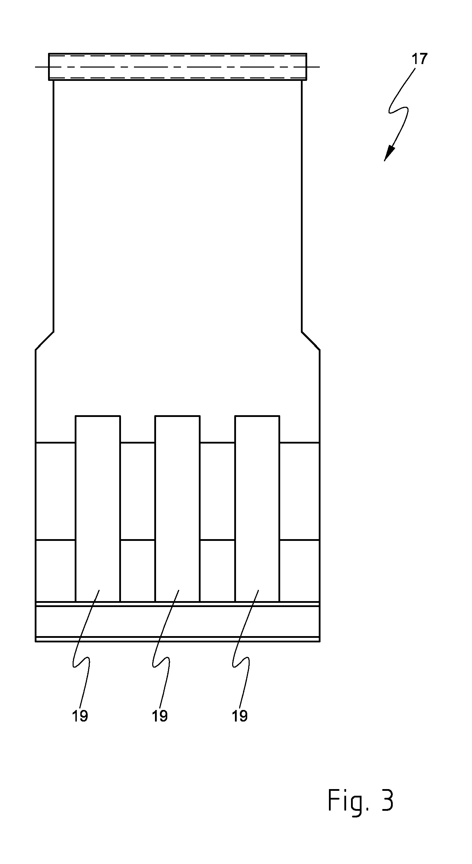

Frame 8 is further provided with a support 20 to which is fixed a foot 17. Foot 17 is provided with a number of openings 19, one of which is intended for passage of drill 10. Foot 17 is shown in more detail in figure 3. Foot 17 is movable between a rest position (shown in figure 2B) and an operating position (shown in figure 2C). In the operating position foot 17 supports on the ground close to the intended sampling position.

During the movement from the rest position to the operating position foot 17 is first lowered. The drill is subsequently inserted into the ground and is (re)filled with a soil sample. In the shown preferred embodiment frame 8 is provided with pins 22 extending on either side of drill 10. Pins 22 co-displace with drill 10 in and out of the ground. During the reverse movement from the operating position to the rest position the filled drill is first pulled out of the ground. This is also the case for the pins that are present. The foot is then also moved to the rest position.

During the DOWNWARD and UPWARD movements of sampling means 10 the apparatus 1 continues moving. As a result frame 8 moves along carriage 4 and sampling means 10 move DOWNWARD or UPWARD through carriage opening 6. The time required for the movement of the drill from the rest position to the operating position, and vice versa, is a determining factor for the maximum travel speed of apparatus 1, as is the length of the carriage opening. Tests have shown that, using the apparatus according to the invention, a travel speed of 12 kilometres per hour is attainable for the purpose of taking soil samples without stopping.

In combination with this high speed, the apparatus according to the invention makes it possible to insert the drill sufficiently deeply into the ground to enable compliance with the usual requirements set down in the Netherlands for soil samples. Tests have shown that a depth of 30 centimetres can be achieved using the apparatus according to the invention. This depth can be achieved through the inventive design choice for a vertical movement of the drill under the influence of the force of gravity. Depending on the conditions, the movement is further assisted by the drive. This may for instance be necessary in the case of hard ground.

Apparatus 1 can be operated manually. During travel the driver can take soil samples at his/her own discretion at diverse sampling positions. The apparatus according to the invention can optionally also take an automatic form. The apparatus is then additionally equipped with means for automatically controlling the movements of the sampling means both transversely of and parallel to the direction of travel. This can be embodied by controlling the drive in computer-controlled manner for the purpose of actuating bearing block 38, and optionally bearing block 12. The control means suitable for this purpose are commercially available per se.

The invention is of course not limited to the described and shown preferred embodiment, but extends to any embodiment falling within the scope of protection as defined in the claims as seen in the light of the foregoing description and associated drawings.

## Claims

1. Apparatus for taking soil samples, comprising means for moving the apparatus and sampling means for taking soil samples during travel of the apparatus, **characterized in that** the apparatus is provided with first means for moving the sampling means substantially transversely of the direction of travel; and with second means for moving the sampling means substantially parallel to the direction of travel.

2. Apparatus as claimed in claim 1, wherein the sampling means are mounted on the first means, and wherein the first means are mounted on the second means for movement substantially parallel to the direction of travel.

3. Apparatus as claimed in claim 1, wherein the first means comprise a frame which is provided with guide means for guiding the sampling means substantially transversely of the direction of travel.

4. Apparatus as claimed in claim 1, wherein the first means further comprise drive means for driving the movement of the sampling means substantially transversely of the direction of travel.

5. Apparatus as claimed in claim 1, wherein the second means comprise a carriage which is provided with guide means for guiding the first means substantially parallel to the direction of travel and with an opening for passage of the sampling means.

6. Apparatus as claimed in claim 5, wherein the carriage extends at an angle relative to the direction of travel such that the height of the carriage increases in the direction opposite the direction of travel.

7. Apparatus as claimed in claim 1, wherein the apparatus is provided with means for receiving the soil samples taken.

8. Apparatus as claimed in claim 7, wherein the apparatus is provided with means for emptying the sampling means and for transferring the taken soil samples to the receiving means.

9. Apparatus as claimed in claim 1, wherein the apparatus is provided with a foot which is adapted to support on the ground close to a sampling position, this foot being provided with an opening for passage of the sampling means.

10. Apparatus as claimed in claim 1, wherein the apparatus is provided with means for controlling the first and second means for the purpose of automatically taking soil samples.
